(19) **Europäisches Patentamt European Patent Office Office européen des brevets**

(11) **EP 3 905 572 B1**

(12) **EUROPEAN PATENT SPECIFICATION**

(45) Date of publication and mention
of the grant of the patent:
**21.06.2023 Bulletin 2023/25**

(21) Application number: **19905513.8**

(22) Date of filing: **23.12.2019**

(51) International Patent Classification (IPC):
***H04L 5/00*** *(2006.01)*

(52) Cooperative Patent Classification (CPC):
**H04L 5/0053; H04B 17/24**

(86) International application number:
**PCT/CN2019/127610**

(87) International publication number:
**WO 2020/135358 (02.07.2020 Gazette 2020/27)**

(54) **COVERAGE LEVEL INDICATION INFORMATION REPORTING METHOD AND DEVICE, AND USER EQUIPMENT**

VORRICHTUNG UND VERFAHREN ZUR MELDUNG VON INFORMATIONEN ÜBER DEN ABDECKUNGSGRAD UND BENUTZERGERÄT

DISPOSITIF ET PROCÉDÉ DE RAPPORT D'INFORMATIONS D'INDICATION DE NIVEAU DE COUVERTURE ET ÉQUIPEMENT UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2018 CN 201811620804**

(43) Date of publication of application:
**03.11.2021 Bulletin 2021/44**

(73) Proprietor: **Sanechips Technology Co., Ltd. Shenzhen, Guangdong 518055 (CN)**

(72) Inventor: **CHEN, Yu**
**Shenzhen, Guangdong 518055 (CN)**

(74) Representative: **Canzler & Bergmeier Patentanwälte Partnerschaft mbB et al Despag-Straße 6 85055 Ingolstadt (DE)**

(56) References cited:
**WO-A1-2018/232696 US-A1- 2018 176 847**

**Description**

**Technical Field**

Embodiments of the present disclosure relate to, but are not limited to, narrowband Internet of Things communication technology, and in particular, to a method and device for reporting coverage enhancement level indication information, and user equipment, which can be applied to a terminal.

**Background**

The Narrow Band Internet of Things (NB-IoT) is an important branch of Internet of Everything (IoE). In order to meet the extremely high requirements of the terminal in terms of low power consumption and low costs, the protocol specification of the NB-IoT has been greatly simplified compared with the Long Term Evolution (LTE) and the LTE-A (LTE-Advanced), for example, the NB-IoT cancels Channel Quality Indication (CQI) information sent on the uplink. On the one hand, the network determines a coverage enhancement level mainly based on coverage enhancement level indication information reported by a terminal; on the other hand, according to the requirements of the protocol specification, the terminal determines the coverage enhancement level indication information according to a Reference Signal Receiving Power (RSRP) value estimated by the terminal.

That is to say, in the related art, the terminal determines and reports the coverage enhancement level indication information only according to the RSRP value estimated by the terminal. However, the RSRP value estimated by the terminal can only reflect the strength of the cellular coverage signal, but cannot reflect the signal quality, therefore, the physical resource bearers and the number of repeated transmissions selected by the network during resource allocation and scheduling cannot be optimally matched with the actual data reception performance of the terminal.

U.S. patent application publication No. US 2018/176847A1 provides a method of managing indication of Coverage Extension (CE) level. The method includes determining the CE level from a Downlink (DL) measurement. Further, the method includes indicating the CE level determined to a Base station (BS). Further, the method includes determining a change in the CE level and indicates the change in the CE level to the BS. Further, the method includes attempting a RRC connection establishment using one of a CE specific Random Access Channel (RACH) preamble and CE specific Physical Random Access Channel (PRACH) resources.

International patent application publication No. WO 2018/232696A1 provides a communication method and device. The method comprises: a terminal device determining a current coverage level from at least two coverage levels according to the received power of a reference signal, wherein each coverage level of the at least two coverage levels corresponds to a power ramping step; and the terminal device, according to a current power ramping step corresponding to the current coverage level, sending, to a network device and according to a power ramping mode, a preamble for random access. Therefore, in the embodiments of the application, the preamble is sent by the terminal device in the current coverage level according to the power ramping mode, so that the impact on other terminal devices can be reduced.

**Summary**

Embodiments of the present disclosure provide a method and device for reporting coverage enhancement level indication information, user equipment, and a computer storage medium, which can enable physical resource bearers and the number of repeated transmissions selected by a network during resource allocation and scheduling to be optimally matched with actual data reception performance of a terminal

The features of the method and device for reporting coverage enhancement level indication information, user equipment, and a computer storage medium according to the present invention are defined in the independent claim, and the preferable features according to the present invention are defined in the dependent claims.

**Brief Description of the Drawings**

Fig. 1 is a first flowchart of a method for reporting coverage enhancement level indication information according to an embodiment of the present disclosure;
Fig. 2 is a second flowchart of a method for reporting coverage enhancement level indication information according to an embodiment of the present disclosure;
Fig. 3 is a schematic structural diagram of a device for reporting coverage enhancement level indication information according to an embodiment of the present disclosure; and
Fig. 4 is a schematic structural diagram of another device for reporting coverage enhancement level indication information according to an embodiment of the present disclosure.

**Detailed Description**

The present disclosure will be further described in detail with reference to the accompanying drawings and embodiments. It should be understood that the exemplary embodiments described herein are only used to explain the present disclosure and are not intended to limit the present disclosure.

NB-IoT is focused on a Low Power Wide Area (LPWA) Internet of things market, and is an emerging technology that can be widely applied in a global range. NB-IoT is constructed based on a cellular network, and has advantages such as wide coverage, large capacity, low power consumption and low cost. A licensed frequency band adopted by the NB-IoT only occupies a 200 KHz bandwidth, and may be deployed in three manners, i.e., in-band, guard-band, or stand-alone. The NB-IoT coexists with an existing Global System for Mobile Communications (GSM) network, a Universal Mobile Telecommunications System (UMTS) network, or an LTE network, so as to reduce deployment costs and implement smooth upgrade.

NB-IoT can be widely applied in a variety of vertical industries, such as remote meter reading, asset tracking, intelligent parking and intelligent agriculture. For NB-IoT, the strength of the cellular coverage signal is more complicated and variable, and is generally divided into four Coverage Enhancement (CE) levels: normal coverage, medium coverage, weak coverage and limit coverage. Taking the China Telecom Internet of Things NB-IoT module test method-data performance brochure as an example, a cell coverage strength parameter table is provided according to the RSRP value, for example, the RSRP value corresponding to normal coverage is -112 dBm, the RSRP value corresponding to medium coverage is -122 dBm, the RSRP value corresponding to weak coverage is -132 dBm, and the RSRP value corresponding to limit coverage is less than -132 dBm.

Under different coverage enhancement levels, there are great differences between resource allocation modes and scheduling policies used by the network, for example, in a normal coverage scenario, when the network issues a maximum transmission block with the size of 680, a smallest number of physical resources (three physical subframes) may be used; in a weak coverage scenario, when a network issues a maximum transmission block with the size of 680, the largest number of physical resources (10 physical subframes) may be used; in a limit coverage scenario, it is even considered to further increase the number of repeated transmissions of data, so as to match a data reception performance requirement of a terminal, which results in a significant increase in a data transmission delay.

The network determines the coverage enhancement level mainly according to coverage enhancement level indication information reported by the terminal, and no other reported information can be used as a reference. The user equipment determines the coverage enhancement level indication information according to the RSRP value estimated by the user equipment.

However, the RSRP value estimated by the terminal can only reflect the strength of the cellular coverage signal, but cannot reflect the signal quality. Typically, when there is a strong intra-frequency interference signal, there may be a case where the cellular coverage signal is strong but the cellular coverage signal is of low quality. In this case, if the terminal only reports the "normal coverage enhancement level" indication according to the RSRP value, and the network performs resource allocation and scheduling according to the "normal coverage enhancement level", then the physical resource bearers and the number of repeated transmissions cannot be matched with the data reception performance of the terminal under the condition of strong intra-frequency interference. In such a case, the physical layer and the data link layer will have a large amount of data retransmissions, which not only severely affect the data throughput rate and the transmission delay, but also result in link abnormality due to data congestion.

In conclusion, in the related art, a terminal determines and reports coverage enhancement level indication information according to an estimated RSRP value, which can only reflect the strength of the cellular coverage signal, but cannot reflect the quality of the cellular coverage signal, so that the physical resource bearers and the number of repeated transmissions selected by the network during resource allocation and scheduling cannot be optimally matched the actual data reception performance of the terminal.

With regard to the described problem, the embodiments of the present disclosure provide a method and device for reporting coverage enhancement level indication information, user equipment and a computer storage medium, which can be used at a terminal. In practical implementation, the terminal can determine and report the coverage enhancement level indication information to the network according to the channel quality which serves as auxiliary information.

Based on the described contents, the following embodiments are proposed.

First Embodiment

A first embodiment of the present disclosure provides a method for reporting coverage enhancement level indication information.

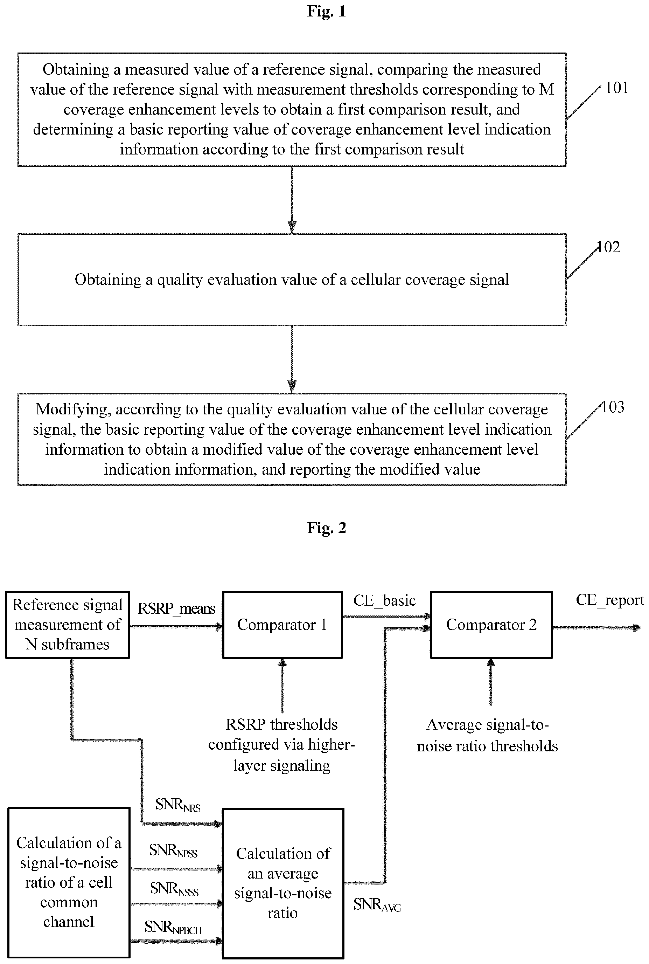

Fig. 1 is a first flowchart of a method for reporting coverage enhancement level indication information according to an embodiment of the present disclosure, and as shown in Fig. 1, the flow includes the following operations.

In operation 101, a measured value of a reference signal (e.g., Narrowband Reference Signal (NRS)) is obtained, the measured value of the reference signal is compared with measurement thresholds corresponding to M coverage enhancement levels to obtain a first comparison result, and a basic reporting value of coverage enhancement level indication information is determined according to the first comparison result, wherein M is an integer greater than or equal to 1.

In a practical application, user equipment may start measurement of a reference signal before initial random access procedure to obtain the measured value of the reference signal. Fig. 2 is a second flowchart of a method for reporting coverage enhancement level indication information according to an embodiment of the present disclosure. Exemplarily, as shown in Fig. 2, reference signal measurement of N subframes may be started, where N is an integer greater than or equal to 1, and a typical value of N is 1, 2, 4, 8, 16, 32, 64, 128, 256, 512, 1024 or 2048.

The measured value of the reference signal is used for representing the strength of a cellular coverage signal, and exemplarily, the measured value of the reference signal may include an RSRP value.

In practical implementation, the measurement thresholds corresponding to the M coverage enhancement levels may be thresholds configured by higher-layer signaling.

With reference to Fig. 2, the measured value of the reference signal can be compared with the measurement thresholds corresponding to the M coverage enhancement levels in the comparator 1, then a first comparison result is obtained, a basic reporting value CE_basic of coverage enhancement level indication information is determined according to the first comparison result, and the basic reporting value CE _basic is sent to the comparator 2.

In operation 102, a quality evaluation value of a cellular coverage signal is obtained.

In practical applications, a quality evaluation value of the reference signal can also be obtained by measuring the reference signal. Exemplarily, the quality evaluation value of the reference signal is a signal-to-noise ratio $SNR_{NRS}$ of the reference signal.

In some exemplary implementations, the user equipment may also obtain a quality evaluation value of a signal of a cell common channel (for example, the quality evaluation value may be obtained by calculating a signal-to-noise ratio of the cell common channel). Exemplarily, the cell common channel includes, but is not limited to, a Narrowband Primary Synchronization Signal (NPSS), a Narrowband Secondary Synchronization Signal (NSSS), a Narrowband Physical Broadcast Channel (NPBCH), a Narrowband Physical Downlink Shared Channel (NPDSCH) for carrying System Information Block (SIB) information, and an NPDSCH for carrying System Information (SI). In the embodiments of the present disclosure, the signal-to-noise ratio of NPSS is recorded as $SNR_{NPSS}$, the signal-to-noise ratio of NSSS is recorded as $SNR_{NSSS}$, the signal-to-noise ratio of NPBCH is recorded as $SNR_{NPBCH}$, the signal-to-noise ratio of NPDSCH for carrying SIB information is recorded as $SNR_{NPDSCH-1}$, and the signal-to-noise ratio of NPDSCH for carrying SI is recorded as $SNR_{NPDSCH-2}$.

With regard to an implementation method for obtaining the quality evaluation value of the cellular coverage signal, according to the invention weighted summation is performed on a quality evaluation value of the reference signal and a signal quality evaluation value of a cell common channel to obtain the quality evaluation value of the cellular coverage signal. In another example, a quality evaluation value of the reference signal or a signal quality evaluation value of a cell common channel may be taken as the quality evaluation value of the cellular coverage signal.

In conjunction with Fig. 2, an average signal-to-noise ratio may be calculated according to a quality evaluation value of the reference signal and a signal quality evaluation value of a cell common channel, i.e. weighted summation is performed on the quality evaluation value of the reference signal and the quality evaluation value of the signal of the cell common channel to obtain the quality evaluation value $SNR_{AVG}$ of the cellular coverage signal. The quality evaluation value $SNR_{AVG}$ of the cellular coverage signal is sent to the comparator 2.

In operation 103, the basic reporting value of the coverage enhancement level indication information is modified according to the quality evaluation value of the cellular coverage signal to obtain a modified value of the coverage enhancement level indication information, and the modified value is reported.

As an implementation, the quality evaluation value of the cellular coverage signal may be compared with average signal-to-noise ratio thresholds corresponding to M coverage enhancement levels to obtain a second comparison result; the basic reporting value of the coverage enhancement level indication information may be modified according to the second comparison result to obtain the modified value of the coverage enhancement level indication information.

In the embodiment of the present disclosure, the average signal-to-noise ratio thresholds corresponding to the M coverage enhancement levels may be preset.

In Fig. 2, the average signal-to-noise ratio thresholds represent preset average signal-to-noise ratio thresholds corresponding to M coverage enhancement levels. Referring to Fig. 2, the average signal-to-noise ratio thresholds may be input into the comparator 2; then, in the comparator 2, the quality evaluation value of the cellular coverage signal is compared with the average signal-to-noise ratio thresholds corresponding to the M coverage enhancement levels to obtain a second comparison result; the basic reporting value of the coverage enhancement level indication information is modified according to the second comparison result to obtain a modified value CE_report of the coverage enhancement level indication information; finally, the modified value CE_report of the coverage enhancement level indication information may be reported to the network.

Exemplarily, in a case where M is greater than 1, the measurement thresholds corresponding to the M coverage enhancement levels include: a first measurement threshold to an Mth measurement threshold which are sequentially arranged in a descending order. For example, in a case where M is equal to 4, the measurement thresholds corresponding to the M coverage enhancement levels are RSRP_TH_CE0, RSRP_TH_CE1, RSRP_TH_CE2, and RSRP_TH_CE3 with their values being in a descending order.

The average signal-to-noise ratio thresholds corresponding to the M coverage enhancement levels include: a first average signal-to-noise ratio threshold to an Mth average signal-to-noise ratio threshold which are arranged a descending order. For example, in a case where M is equal to 4, the average signal-to-noise ratio thresholds corresponding to the M coverage enhancement levels are SNR_TH_CE0, SNR_TH_CE1, SNR_TH_CE2, and SNR_TH_CE3 with their values being in a descending order.

An implementation of modifying the basic reporting value of the coverage enhancement level indication information will be described exemplarily below.

In a case where the measured value of the reference signal is greater than or equal to the first measurement threshold and the quality evaluation value of the cellular coverage signal is greater than or equal to the first average signal-to-noise ratio threshold, the modified value of the coverage enhancement level indication information is determined to be equal to the basic reporting value.

In a case where the measured value of the reference signal is greater than or equal to the first measurement threshold and the quality evaluation value of the cellular coverage signal is less than the first average signal-to-noise ratio threshold, the modified value of the coverage enhancement level indication information is determined to be equal to a second coverage enhancement level.

For i being set to an integer greater than 1 and less than M, in a case where the measured value of the reference signal is greater than or equal to an ith measurement threshold and is less than an (i-1)th measurement threshold, and the quality evaluation value of the cellular coverage signal is greater than or equal to an ith average signal-to-noise ratio threshold, the modified value of the coverage enhancement level indication information is determined to be equal to the basic reporting value.

In a case where the measured value of the reference signal is greater than or equal to an ith measurement threshold and is less than an (i-1)th measurement threshold, and the quality evaluation value of the cellular coverage signal is less than an ith average signal-to-noise ratio threshold, the modified value of the coverage enhancement level indication information is determined to be equal to an (i+1)th coverage enhancement level.

In a case where the measured value of the reference signal is greater than or equal to an Mth measurement threshold and is less than an (M-1)th measurement threshold, and the quality evaluation value of the cellular coverage signal is greater than or equal to an Mth average signal-to-noise ratio threshold, the modified value of the coverage enhancement level indication information is determined to be equal to the basic reporting value.

In a case where the measured value of the reference signal is greater than or equal to an Mth measurement threshold and is less than an (M-1)th measurement threshold, and the quality evaluation value of the cellular coverage signal is less than an Mth average signal-to-noise ratio threshold, the modified value of the coverage enhancement level indication information is determined to be equal to an Mth coverage enhancement level.

In a case where the measured value of the reference signal is less than or equal to the Mth measurement threshold, the modified value of the coverage enhancement level indication information is determined to be equal to the basic reporting value.

In practical application, operation 101 to operation 103 may be implemented by a processor in the user equipment, The processor may be at least one of an Application Specific Integrated Circuit (ASIC), a Digital Signal Processor (DSP), a Digital Signal Processing Device (DASD), a Programmable Logic Device (PLD), a Field Programmable Gate Array (FPGA), a Central Processing Unit (CPU), a controller, a microcontroller, and a microprocessor.

It can be seen that, when the technical solution of the embodiments of the present disclosure is adopted, the coverage enhancement level indication information can be modified on the basis of the quality evaluation value of the cellular coverage signal, and therefore the coverage enhancement level indication information received by the network can reflect the quality of the cellular coverage signal. In addition, the physical resource bearers and the number of repeated transmissions selected by the network during resource allocation and scheduling can be matched with the actual data reception performance of the terminal.

Second Embodiment

In order to better reflect the objectives of the present disclosure, an example is further given on the basis of the first embodiment of the present disclosure.

In the second embodiment of the present disclosure, there are four coverage enhancement levels: normal coverage (CEO), medium coverage (CE1), weak coverage (CE2) and limit coverage (CE3). The measurement thresholds corresponding to the four coverage enhancement levels are RSRP_TH_CE0 (corresponding to CE0), RSRP_TH_CE1 (corresponding to CE1), RSRP_TH_CE2 (corresponding to CE2) and RSRP_TH_CE3 (corresponding to CE3) with their values being in a descending order. The average signal-to-noise ratio thresholds corresponding to the four coverage enhancement levels are SNR_TH_CE0 (corresponding to CE0), SNR_TH_CE1 (corresponding to CE1), SNR_TH_CE2 (corresponding to CE2 and SNR_TH_CE3 (corresponding to CE3) with their values being in a descending order.

The flow of a method for reporting coverage enhancement level indication information according to a second embodiment of the present disclosure includes the following operations.

In operation 1-1: before initial random access, user equipment starts reference signal measurement of N subframes, and obtains an RSRP value RSRP_means of a reference signal and a signal-to-noise ratio $SNR_{NRS}$ of the reference signal.

In operation 1-2: measurement thresholds corresponding to the four coverage enhancement levels configured by the network are obtained from higher-layer signaling.

In operation 1-3: RSRP _means is respectively compared with the measurement thresholds corresponding to the four coverage enhancement levels to obtain a first comparison result, and a basic reporting value CE_basic of coverage enhancement level indication information is determined according to the first comparison result.

In some exemplary implementations, if RSRP _means $\geq$ RSRP_TH_CE0, CE_basic = CE0.

If RSRP _means < RSRP_TH_CE0 and RSRP _means $\geq$ RSRP_TH_CE1, CE_basic = CE1.

If RSRP _means < RSRP_TH_CE1 and RSRP _means $\geq$ RSRP_TH_CE2, CE_basic = CE2.

If RSRP _means < RSRP_TH_CE2 and RSRP _means $\geq$ RSRP_TH_CE3, CE_basic = CE3.

If RSRP _means < RSRP_TH_CE3, CE basic = CE3.

In operation 1-4: the N subframes in operation 1-1 correspond to three types of cell common channels, respectively being NPSS, NSSS and NPBCH, and accordingly, the calculated signal-to-noise ratios of the cell common channels are respectively $SNR_{NPSS}$, $SNR_{NSSS}$ and $SNR_{NPBCH}$. Weight values are respectively set for the reference signal and the three types of cell common channels as: $\alpha_{NRS}$, $\alpha_{NPSS}$, $\alpha_{NSSS}$ and $\alpha_{NPBCH}$, wherein the value ranges are all [0, 1], and "$\alpha_{NRS} + \alpha_{NPSS} + \alpha_{NSSS} + \alpha_{NPBCH} = 1$" is satisfied. Weighted summation is performed on the signal-to-noise ratios of the reference signal and the cell common channels to obtain an average signal-to-noise ratio $SNR_{AVG}$:

$$SNR_{AVG} = \alpha_{NRS} * SNR_{NRS} + \alpha_{NPSS} * SNR_{NPSS}$$

$$+ \alpha_{NSSS} * SNR_{NSSS} + \alpha_{NPBCH} * SNR_{NPBCH}$$

In operation 1-5: the average signal-to-noise ratio $SNR_{AVG}$ obtained in step 1-4 is compared with the average signal-to-noise ratio thresholds corresponding to the four coverage enhancement levels respectively to obtain a second comparison result; the basic reporting value of the coverage enhancement level indication information is modified according to the second comparison result to obtain a modified value CE_report of the coverage enhancement level indication information.

In some exemplary implementations, if RSRP_means $\geq$ RSRP_TH_CE0 and $SNR_{AVG}$ $\geq$ SNR_TH_CE0, CE_report = CE_basic; if RSRP _means $\geq$ RSRP_TH_CE0 and $SNR_{AVG}$ < SNR_TH_CE0, CE report = CE1.

If RSRP_TH_CE1 $\leq$ RSRP means < RSRP_TH_CE0 and $SNR_{AVG}$ $\geq$ SNR_TH_CE1, CE report = CE basic; if RSRP _TH_CE1 $\leq$ RSRP_means < RSRP_TH_CE0 and $SNR_{AVG}$ < SNR_TH_CE1, CE report = CE2.

If RSRP_TH_CE2 $\leq$ RSRP means < RSRP_TH_CE1 and $SNR_{AVG}$ $\geq$ SNR_TH_CE2, CE report = CE basic; if RSRP_TH_CE2 $\leq$ RSRP_means < RSRP_TH_CE1 and $SNR_{AVG}$ < SNR_TH_CE2, CE report = CE3.

If RSRP_TH_CE3 $\leq$ RSRP means < RSRP_TH_CE2 and $SNR_{AVG}$ $\geq$ SNR_TH_CE3, CE report = CE basic; if RSRP _TH_CE3 $\leq$ RSRP_means < RSRP_TH_CE2 and $SNR_{AVG}$ < SNR_TH_CE3, CE report = CE3.

If RSRP _means < RSRP_TH_CE3, CE_report = CE_basic.

Third Embodiment

In order to better reflect the objectives of the present disclosure, an example is further given on the basis of the first embodiment of the present disclosure.

In the third embodiment of the present disclosure, there are four coverage enhancement levels: normal coverage (CEO), medium coverage (CE1), weak coverage (CE2) and limit coverage (CE3). The measurement thresholds corresponding to the four coverage enhancement levels are RSRP_TH_CE0 (corresponding to CE0), RSRP_TH_CE1 (corresponding to CE1), RSRP_TH_CE2 (corresponding to CE2) and RSRP_TH_CE3 (corresponding to CE3) with their values being in a descending order. The average signal-to-noise ratio thresholds corresponding to the four coverage enhancement levels are SNR_TH_CE0 (corresponding to CE0), SNR_TH_CE1 (corresponding to CE1), SNR_TH_CE2 (corresponding to CE2) and SNR_TH_CE3 (corresponding to CE3) with their values being in a descending order.

The flow of a method for reporting coverage enhancement level indication information according to a third embodiment of the present disclosure includes the following operations.

In operation 2-1: before initial random access, user equipment starts reference signal measurement of N subframes, and obtains an RSRP value RSRP _means of a reference signal and a signal-to-noise ratio $SNR_{NRS}$ of the reference signal.

In operation 2-2: measurement thresholds corresponding to the four coverage enhancement levels configured by the network are obtained from higher-layer signaling.

In operation 2-3: RSRP _means is respectively compared with the measurement thresholds corresponding to the four coverage enhancement levels to obtain a first comparison result, and a basic reporting value CE _basic of coverage enhancement level indication information is determined according to the first comparison result.

In some exemplary implementations, if RSRP_means $\geq$ RSRP_TH_CE0, CE_basic = CE0.

If RSRP _means < RSRP_TH_CE0 and RSRP _means $\geq$ RSRP_TH_CE1, CE_basic = CE1.

If RSRP _means < RSRP_TH_CE1 and RSRP _means $\geq$ RSRP_TH_CE2, CE_basic = CE2.

If RSRP _means < RSRP_TH_CE2 and RSRP _means $\geq$ RSRP_TH_CE3, CE_basic = CE3.

If RSRP _means < RSRP_TH_CE3, CE basic = CE3.

In operation 2-4: the N subframes in operation 2-1 correspond to two types of cell common channels, respectively being NPSS and NSSS, and accordingly, the calculated signal-to-noise ratios of the cell common channels are respectively $SNR_{NPSS}$ and $SNR_{NSSS}$. Weight values are respectively set for the reference signal and the two types of cell common channels as: $\alpha_{NRS}$, $\alpha_{NPSS}$ and $\alpha_{NSSS}$, wherein the value ranges are all [0, 1], and "$\alpha_{NRS} + \alpha_{NPSS} + \alpha_{NSSS} = 1$" is satisfied. Weighted summation is performed on the signal-to-noise ratios of the reference signal and the cell common channels to obtain an average signal-to-noise ratio $SNR_{AVG}$:

$$SNR_{AVG} = \alpha_{NRS} * SNR_{NRS} + \alpha_{NPSS} * SNR_{NPSS} + \alpha_{NSSS} * SNR_{NSSS}$$

In operation 2-5: the average signal-to-noise ratio $SNR_{AVG}$ obtained in operation 2-4 is compared respectively with the average signal-to-noise ratio thresholds corresponding to the four coverage enhancement levels to obtain a second comparison result; the basic reporting value of the coverage enhancement level indication information is modified according to the second comparison result to obtain a modified value CE_report of the coverage enhancement level indication information.

In some exemplary implementations, if RSRP_means $\geq$ RSRP_TH_CE0 and $SNR_{AVG} \geq$ SNR TH_CE0, CE_report = CE _basic; if RSRP _means $\geq$ RSRP_TH_CE0 and $SNR_{AVG}$ <SNR_TH_CE0, CE report = CE1.

If RSRP_TH_CE1 $\leq$ RSRP means < RSRP_TH_CE0 and $SNR_{AVG} \geq$ SNR_TH_CE1, CE_report = CE_basic; if RSRP _TH_CE1 $\leq$ RSRP_means < RSRP_TH_CE0 and $SNR_{AVG}$ < SNR_TH_CE1, CE report = CE2.

If RSRP_TH _CE2 $\leq$ RSRP means < RSRP_TH_CE1 and $SNR_{AVG} \geq$ SNR_TH_CE2, CE report = CE basic; if RSRP _TH_CE2 $\leq$ RSRP_means < RSRP_TH_CE1 and $SNR_{AVG}$ < SNR_TH_CE2, CE report = CE3.

If RSRP_TH_CE3 $\leq$ RSRP means < RSRP_TH_CE2 and $SNR_{AVG} \geq$ SNR_TH_CE3, CE report = CE basic; if RSRP _TH_CE3 $\leq$ RSRP_means <RSRP_TH_CE2 and $SNR_{AVG}$ < SNR_TH_CE3, CE report = CE3.

If RSRP _means < RSRP_TH_CE3, CE report = CE basic.

Fourth Embodiment

In order to better reflect the objectives of the present disclosure, an example is further given on the basis of the first embodiment of the present disclosure.

In the fourth embodiment of the present disclosure, there are four coverage enhancement levels, i.e., normal coverage (CEO), medium coverage (CE1), weak coverage (CE2) and limit coverage (CE3). The measurement thresholds corresponding to the four coverage enhancement levels are RSRP_TH_CE0 (corresponding to CE0), RSRP_TH_CE1 (corresponding to CE1), RSRP_TH_CE2 (corresponding to CE2) and RSRP_TH_CE3 (corresponding to CE3) with their values being in a descending order. The average signal-to-noise ratio thresholds corresponding to the four coverage enhancement levels are SNR_TH_CE0 (corresponding to CE0), SNR_TH_CE1 (corresponding to CE1), SNR_TH_CE2 (corresponding to CE2) and SNR_TH_CE3 (corresponding to CE3) with their values being in a descending order.

The method for reporting coverage enhancement level indication information according to the fourth embodiment of the present disclosure includes the following operations.

In operation 3-1: before initial random access, user equipment starts reference signal measurement of N subframes, and obtains an RSRP value RSRP_means of a reference signal and a signal-to-noise ratio $SNR_{NRS}$ of the reference signal.

In operation 3-2: measurement thresholds corresponding to the four coverage enhancement levels configured by the network are obtained from higher-layer signaling.

In operation 3-3: RSRP _means is respectively compared with the measurement thresholds corresponding to the four coverage enhancement levels to obtain a first comparison result, and a basic reporting value CE_basic of coverage enhancement level indication information is determined according to the first comparison result.

In some exemplary implementations, if RSRP _means ≥ RSRP_TH_CE0, CE_basic = CE0.

If RSRP _means < RSRP_TH_CE0 and RSRP _means ≥ RSRP_TH_CE1, CE_basic = CE1.

If RSRP_means < RSRP_TH_CE1 and RSRP _means ≥ RSRP_TH_CE2, CE_basic = CE2.

If RSRP _means < RSRP_TH_CE2 and RSRP _means ≥ RSRP_TH_CE3, CE_basic = CE3.

If RSRP _means < RSRP_TH_CE3, CE basic = CE3.

In operation 3-4: the N subframes in operation 3-1 correspond to two types of cell common channels, respectively being NPSS and NPBCH, and accordingly, the calculated signal-to-noise ratios of the cell common channels are respectively $SNR_{NPSS}$ and $SNR_{NPBCH}$. Weight values are respectively set for the reference signal and the two types of cell common channels as: $\alpha_{NRS}$, $\alpha_{NPSS}$ and $\alpha_{NPBCH}$, wherein the value ranges are all [0, 1], and "$\alpha_{NRS} + \alpha_{NPSS} + \alpha_{NPBCH} = 1$" is satisfied. Weighted summation is performed on the signal-to-noise ratios of the reference signal and the cell common channels to obtain an average signal-to-noise ratio $SNR_{AVG}$:

$$SNR_{AVG} = \alpha_{NRS} * SNR_{NRS} + \alpha_{NPSS} * SNR_{NPSS} + \alpha_{NPBCH} * SNR_{NPBCH}$$

In operation 3-5: the average signal-to-noise ratio $SNR_{AVG}$ obtained in operation 3-4 is respectively compared with the average signal-to-noise ratio thresholds corresponding to the four coverage enhancement levels to obtain a second comparison result; the basic reporting value of the coverage enhancement level indication information is modified according to the second comparison result to obtain a modified value CE_report of the coverage enhancement level indication information.

In some exemplary implementations, if RSRP_means ≥ RSRP_TH_CE0 and $SNR_{AVG}$ ≥ SNR_TH_CE0, CE_report = CE_basic; if RSRP _means ≥ RSRP_TH_CE0 and $SNR_{AVG}$ <SNR_TH_CE0, CE report = CE1.

If RSRP_TH_CE1 ≤ RSRP means < RSRP_TH_CE0 and $SNR_{AVG}$ ≥ SNR_TH_CE1, CE report = CE basic; if RSRP _TH_CE1 ≤ RSRP_means < RSRP_TH_CE0 and $SNR_{AVG}$ < SNR_TH_CE1, CE report = CE2.

If RSRP_TH_CE2 ≤ RSRP means < RSRP_TH_CE1 and $SNR_{AVG}$ ≥ SNR_TH_CE2, CE report = CE basic; if RSRP _TH_CE2 ≤ RSRP_means < RSRP_TH_CE1 and $SNR_{AVG}$ < SNR_TH_CE2, CE report = CE3.

If RSRP_TH _CE3 ≤ RSRP means < RSRP_TH_CE2 and $SNR_{AVG}$ ≥ SNR_TH_CE3, CE report = CE basic; if RSRP_TH_CE3 ≤ RSRP_means <RSRP_TH _CE2 and $SNR_{AVG}$ <SNR_TH_CE3 CE report = CE3.

If RSRP _means < RSRP_TH_CE3, CE report = CE basic.

Fifth Embodiment

In order to better reflect the objectives of the present disclosure, an example is further given on the basis of the first embodiment of the present disclosure.

In a fifth embodiment of the present disclosure, there are four coverage enhancement levels, i.e., normal coverage (CEO), medium coverage (CE1), weak coverage (CE2) and limit coverage (CE3). The measurement thresholds corresponding to the four coverage enhancement levels are RSRP_TH_CE0 (corresponding to CE0), RSRP_TH_CE1 (corresponding to CE1), RSRP_TH_CE2 (corresponding to CE2) and RSRP_TH_CE3 (corresponding to CE3) with their values being in a descending order. The average signal-to-noise ratio thresholds corresponding to the four coverage enhancement levels are SNR_TH_CE0 (corresponding to CE0), SNR_TH_CE1 (corresponding to CE1), SNR_TH_CE2 (corresponding to CE2) and SNR_TH_CE3 (corresponding to CE3) with their values being in a descending order.

The flow of a method for reporting coverage enhancement level indication information according to a fifth embodiment of the present disclosure includes the following operations.

In operation 4-1: before initial random access, user equipment starts reference signal measurement of N subframes, and obtains an RSRP value RSRP_means of a reference signal and a signal-to-noise ratio $SNR_{NRS}$ of the reference signal.

In operation 4-2: the measurement thresholds corresponding to the four coverage enhancement levels configured by the network are obtained from higher-layer signaling.

In operation 4-3: RSRP _means is respectively compared with the measurement thresholds corresponding to the four coverage enhancement levels to obtain a first comparison result, and a basic reporting value CE_basic of coverage enhancement level indication information is determined according to the first comparison result.

In some exemplary implementations, if RSRP _means ≥ RSRP_TH_CE0, CE_basic = CE0.

If RSRP _means < RSRP_TH_CE0 and RSRP_means ≥ RSRP_TH_CE1, CE_basic = CE1.

If RSRP _means < RSRP_TH_CE1 and RSRP _means ≥ RSRP_TH_CE2, CE_basic = CE2.

If RSRP _means < RSRP_TH_CE2 and RSRP _means ≥ RSRP_TH_CE3, CE_basic = CE3.

If RSRP _means < RSRP_TH_CE3, CE basic = CE3.

In operation 4-4: the N subframes in operation 4-1 correspond to two types of cell common channels, respectively being NSSS and NPBCH, and accordingly, calculated signal-to-noise ratios of the cell common channels are respectively $SNR_{NSSS}$ and $SNR_{NPBCH}$. Weight values are respectively set for the reference signal and the two types of cell common channels as: $\alpha_{NRS}$, $\alpha_{NSSS}$ and $\alpha_{NPBCH}$, wherein the value ranges are all [0, 1], and "$\alpha_{NRS} + \alpha_{NSSS} + \alpha_{NPBCH} = 1$" is satisfied. Weighted summation is performed on the signal-to-noise ratios of the reference signal and the cell common channels to obtain an average signal-to-noise ratio $SNR_{AVG}$:

$$SNR_{AVG} = \alpha_{NRS} * SNR_{NRS} + \alpha_{NSSS} * SNR_{NSSS} + \alpha_{NPBCH} * SNR_{NPBCH}$$

In operation 4-5: the average signal-to-noise ratio $SNR_{AVG}$ obtained in operation 4-4 is compared with the average signal-to-noise ratio thresholds corresponding to the four coverage enhancement levels respectively to obtain a second comparison result; the basic reporting value of the coverage enhancement level indication information is modified according to the second comparison result to obtain a modified value CE_report of the coverage enhancement level indication information.

In some exemplary implementations, if RSRP_means ≥ RSRP_TH_CE0 and $SNR_{AVG}$ ≥ SNR_TH_CE0, CE_report = CE_basic; if RSRP _means ≥ RSRP_TH_CE0 and $SNR_{AVG}$ < SNR_TH_CE0, CE report = CE1.

If RSRP_TH_CE1 ≤ RSRP means < RSRP_TH_CE0 and $SNR_{AVG}$ ≥ SNR_TH_CE1, CE report = CE basic; if RSRP _TH_CE1 ≤ RSRP_means < RSRP_TH_CE0 and $SNR_{AVG}$ < SNR_TH_CE1, CE report = CE2.

If RSRP_TH_CE2 ≤ RSRP means < RSRP_TH_CE1 and $SNR_{AVG}$ ≥ SNR_TH_CE2, CE report = CE basic; if RSRP _TH_CE2 ≤ RSRP_means < RSRP_TH_CE1 and $SNR_{AVG}$ < SNR_TH_CE2, CE_report = CE3.

If RSRP_TH_CE3 ≤ RSRP means < RSRP_TH_CE2 and $SNR_{AVG}$ ≥ SNR_TH_CE3, CE report = CE basic; if RSRP _TH_CE3 ≤ RSRP_means < RSRP_TH_CE2 and $SNR_{AVG}$ < SNR_TH_CE3, CE report = CE3.

If RSRP _means < RSRP_TH_CE3, CE report = CE basic.

Sixth Embodiment

In order to better reflect the objectives of the present disclosure, an example is further given on the basis of the first embodiment of the present disclosure.

In a sixth embodiment of the present disclosure, there are four coverage enhancement levels: normal coverage (CEO), medium coverage (CE1), weak coverage (CE2) and limit coverage (CE3). The measurement thresholds corresponding to the four coverage enhancement levels are RSRP_TH_CE0 (corresponding to CE0), RSRP_TH_CE1 (corresponding to CE1), RSRP_TH_CE2 (corresponding to CE2) and RSRP_TH_CE3 (corresponding to CE3) with their values being in a descending order. The average signal-to-noise ratio thresholds corresponding to the four coverage enhancement levels are SNR_TH_CE0 (corresponding to CE0), SNR_TH_CE1 (corresponding to CE1), SNR_TH_CE2 (corresponding to CE2) and SNR_TH_CE3 (corresponding to CE3) with their values being in a descending order.

The flow of a method for reporting coverage enhancement level indication information according to a sixth embodiment of the present disclosure includes the following operations.

In operation 5-1: before initial random access, user equipment starts reference signal measurement of N subframes, and obtains an RSRP value RSRP_means of a reference signal and a signal-to-noise ratio $SNR_{NRS}$ of the reference signal.

In operation 5-2: the measurement thresholds corresponding to the four coverage enhancement levels configured by the network are obtained from higher-layer signaling.

In operation 5-3: RSRP _means is respectively compared with the measurement thresholds corresponding to the four coverage enhancement levels to obtain a first comparison result, and a basic reporting value CE_basic of coverage enhancement level indication information is determined according to the first comparison result.

In some exemplary implementations, if RSRP_means ≥ RSRP_TH_CE0, CE_basic = CE0.

If RSRP _means < RSRP_TH_CE0 and RSRP _means ≥ RSRP_TH_CE1, CE_basic = CE1.

If RSRP _means < RSRP_TH_CE1 and RSRP _means ≥ RSRP_TH_CE2, CE_basic = CE2.

If RSRP_means < RSRP_TH_CE2 and RSRP _means ≥ RSRP_TH_CE3, CE_basic = CE3.

If RSRP _means < RSRP_TH_CE3, CE basic = CE3.

In operation 5-4: the N subframes in operation 5-1 correspond to a cell common channel, and the cell common channel corresponding to the N subframes is NPSS, NSSS or NPBCH; accordingly, the calculated signal-to-noise ratios of the cell common channels are respectively $SNR_{NPSS}$, $SNR_{NSSS}$ and $SNR_{NPBCH}$. Taking that a corresponding cell common channel of the N subframes is NPBCH as an example, weight values are respectively set for the reference signal and the cell common channel as: $\alpha_{NRS}$ and $\alpha_{NPBCH}$, wherein the value ranges are both [0, 1], and "$\alpha_{NRS} + \alpha_{NPBCH}$

= 1" is satisfied. Weighted summation is performed on the signal-to-noise ratios of the reference signal and the cell common channels to obtain an average signal-to-noise ratio $SNR_{AVG}$:

$$SNR_{AVG} = \alpha_{NRS} * SNR_{NRS} + \alpha_{NPBCH} * SNR_{NPBCH}$$

In operation 5-5: the average signal-to-noise ratio $SNR_{AVG}$ obtained in operation 5-4 is compared with the average signal-to-noise ratio thresholds corresponding to the four coverage enhancement levels respectively to obtain a second comparison result; the basic reporting value of the coverage enhancement level indication information is modified according to the second comparison result to obtain a modified value CE_report of the coverage enhancement level indication information.

In some exemplary implementations, if RSRP _means $\geq$ RSRP_TH_CE0 and $SNR_{AVG} \geq$ SNR_TH_CE0, CE_report = CE _basic; if RSRP _means $\geq$ RSRP_TH_CE0 and $SNR_{AVG}$ <SNR_TH_CE0, CE report = CE1.

If RSRP_TH_CE1 $\leq$ RSRP means < RSRP_TH_CE0 and $SNR_{AVG} \geq$ SNR_TH_CE1, CE_report = CE_basic; if RSRP_TH_CE1 $\leq$ RSRP_means < RSRP_TH_CE0 and $SNR_{AVG}$ < SNR_TH_CE1, CE report = CE2.

If RSRP_TH_CE2 $\leq$ RSRP means < RSRP_TH_CE1 and $SNR_{AVG} \geq$ SNR_TH_CE2, CE report = CE_basic; if RSRP _TH_CE2 $\leq$ RSRP_means < RSRP_TH_CE1 and $SNR_{AVG}$ < SNR_TH_CE2 CE report = CE3.

If RSRP_TH_CE3 $\leq$ RSRP means < RSRP_TH_CE2 and $SNR_{AVG} \geq$ SNR_TH_CE3, CE report = CE basic; if RSRP _TH_CE3 $\leq$ RSRP_means <RSRP_TH_CE2 and $SNR_{AVG}$ <SNR_TH_CE3, CE report = CE3.

If RSRP_means < RSRP_TH_CE3, CE report = CE basic.

Seventh Embodiment

On the basis of the method for reporting coverage enhancement level indication information provided in the foregoing embodiments of the present disclosure, a seventh embodiment of the present disclosure provides a device for reporting coverage enhancement level indication information, which may be applied to user equipment.

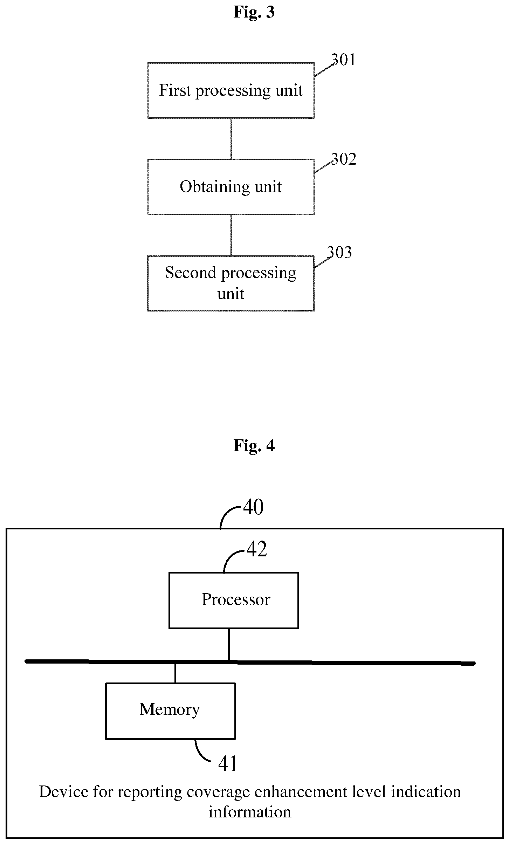

Fig. 3 is a schematic diagram of a structure of a device for reporting coverage enhancement level indication information according to an embodiment of the present disclosure. As shown in Fig. 3, the device includes a first processing unit 301, an obtaining unit 302 and a second processing unit 303.

The first processing unit 301 is configured to obtain a measured value of a reference signal, compare the measured value of the reference signal with measurement thresholds corresponding to M coverage enhancement levels to obtain a first comparison result, and determine a basic reporting value of coverage enhancement level indication information according to the first comparison result, wherein M is an integer greater than or equal to 1.

The obtaining unit 302 is configured to obtain a quality evaluation value of a cellular coverage signal.

The second processing unit 303 is configured to modify, according to the quality evaluation value of the cellular coverage signal, the basic reporting value of the coverage enhancement level indication information to obtain a modified value of the coverage enhancement level indication information, and report the modified value.

According to the invention, the obtaining unit 302 is configured to perform a weighted summation on a quality evaluation value of the reference signal and a signal quality evaluation value of a cell common channel to obtain the quality evaluation value of the cellular coverage signal.

Alternatively, the obtaining unit 302 is configured to take a quality evaluation value of the reference signal or a quality evaluation value of a signal of a cell common channel as the quality evaluation value of the cellular coverage signal.

In an implementation, the quality evaluation value of the reference signal is a signal-to-noise ratio of the reference signal.

In an implementation, the quality evaluation value of the signal of the cell common channel includes a signal-to-noise ratio of at least one of the following: NPSS, NSSS, NPBCH, NPDSCH for carrying SIB information and NPDSCH for carrying SI.

In an embodiment, the second processing unit 303 is configured to compare the quality evaluation value of the cellular coverage signal with average signal-to-noise ratio thresholds corresponding to the M coverage enhancement levels to obtain a second comparison result; and modify the basic reporting value of the coverage enhancement level indication information according to the second comparison result to obtain a modified value of the coverage enhancement level indication information.

In an implementation, in a case where M is greater than 1, the measurement thresholds corresponding to the M coverage enhancement levels include a first measurement threshold to an Mth measurement threshold which are sequentially arranged in a descending order, and the average signal-to-noise ratio thresholds corresponding to the M coverage enhancement levels include a first average signal-to-noise ratio threshold to an Mth average signal-to-noise ratio threshold which are sequentially arranged in a descending order.

In one embodiment, the second processing unit 303 is configured to:

in a case where the measured value of the reference signal is greater than or equal to the first measurement threshold and the quality evaluation value of the cellular coverage signal is less than the first average signal-to-noise ratio threshold, determine the modified value of the coverage enhancement level indication information to be equal to a second coverage enhancement level;

set i to an integer greater than 1 and less than M, in a case where the measured value of the reference signal is greater than or equal to an ith measurement threshold and is less than an (i-1)th measurement threshold, and the quality evaluation value of the cellular coverage signal is less than an ith average signal-to-noise ratio threshold, determine the modified value of the coverage enhancement level indication information to be equal to an (i+1)th coverage enhancement level;

in a case where the measured value of the reference signal is greater than or equal to an Mth measurement threshold and is less than an (M-1)th measurement threshold, and the quality evaluation value of the cellular coverage signal is less than an Mth average signal-to-noise ratio threshold, determine the modified value of the coverage enhancement level indication information to be equal to an Mth coverage enhancement level.

In practical applications, the first processing unit 301, the obtaining unit 302, and the second processing unit 303 may be implemented by a Central Processing Unit (CPU), a Micro Processor Unit (MPU), a Digital Signal Processor (DSP), or a Field Programmable Gate Array (FPGA).

In addition, various function modules in the embodiments may be integrated into one processing unit, or each unit may exist alone physically, or two or more units may be integrated into one unit. The integrated unit may be implemented in a form of hardware, and may also be implemented in a form of a software functional module.

If the integrated unit is realized in the form of a software function module and is not sold or used as an independent product, the integrated unit may be stored in a computer readable storage medium. Based on such understanding, the essence of the technical solution of the present embodiment or in other words the part contributing over the related art, or all or part of the technical solution may be embodied in the form of a software product. The computer software product is stored in a storage medium, and includes a plurality of instructions for causing a computer device (which may be a personal computer, a server, or a network device, etc.) or a processor to execute all or part of the operations of the method described in the embodiments. The foregoing storage medium includes: any medium that can store program codes, such as a USB flash disk, a removable hard disk, a Read Only Memory (ROM), a Random Access Memory (RAM), a magnetic disk, or an optical disk.

Specifically, the computer program instructions corresponding to the method for reporting coverage enhancement level indication information in the embodiments may be stored on a storage medium such as an optical disk, a hard disk, or a U disk. When a computer program instruction corresponding to a method for reporting coverage enhancement level indication information in a storage medium is read or executed by an electronic device, the operations of the method for reporting the coverage enhancement level indication information in the foregoing embodiments are implemented.

Based on the same technical conception as the previous embodiments, referring to Fig. 4, there is shown another device 40 for reporting coverage enhancement level indication information provided in an embodiment of the present disclosure, and the device may include: a memory 41 and a processor 42.

The memory 41 is configured to store a computer program and data.

The processor 42 is configured to execute the computer program stored in the memory to implement operations of any method for reporting the coverage enhancement level indication information in the foregoing embodiments.

In an actual application, the foregoing memory 41 may be a volatile memory, for example, RAM; or a non-volatile memory, such as a ROM, a flash memory, a Hard Disk Drive (HDD), or a Solid-State Drive (SSD); or a combination of the foregoing types of memory, and provides instructions and data to processor 42.

The processor 42 may be at least one of an ASIC, a DSP, a DSPD, a PLD, an FPGA, a CPU, a controller, a microcontroller, and a microprocessor. It can be understood that, for different devices, the electronic device for implementing the functions of the processor may be other electronic devices, and the embodiments of the present disclosure are not limited thereto.

Eighth Embodiment

An eighth embodiment of the present disclosure provides user equipment, including any one of the devices for reporting the coverage enhancement level indication information in the sixth embodiment of the present disclosure.

Those having ordinary skill in the art should understand that the embodiments of the present disclosure can be provided as a method, a system or a computer program product. Therefore, the present disclosure may be implemented in the form of a hardware embodiment, a software embodiment, or an embodiment combining software and hardware aspects. Furthermore, the disclosure may be implemented in the form of a computer program product embodied on one or more computer-readable storage media (including, but not limited to, magnetic disk storage, optical storage, etc.) containing computer-readable program code.

The disclosure is described with reference to flowchart illustrations and/or block diagrams of methods, devices (systems), and computer program products according to embodiments of the disclosure. It should be understood that each flow and/or block in the flowcharts and/or block diagrams and combinations of flows and/or blocks in the flowcharts and/or block diagrams can be implemented by computer program instructions. These computer program instructions may be provided to a processor of a general purpose computer, a special purpose computer, an embedded processor or other programmable data processing device to form a machine, so that instructions executed by a processor of a computer or other programmable data processing device can generate means for implementing the functions specified in one or more flowcharts and/or one or more blocks of the block diagram.

These computer program instructions may also be stored in a computer-readable memory capable of guiding a computer or other programmable data processing devices to work in a specific manner, so that the instructions stored in the computer-readable memory generate a manufactured product including an instruction device, and the instruction device implements functions specified in one or more flows in the flowchart and/or one or more blocks in the block diagram.

These computer program instructions may also be loaded onto a computer or other programmable data processing device, so that a series of operations are executed on the computer or other programmable device to perform computer-implemented processing. The instructions executed on the computer or other programmable device thus provide operations for implementing the functions specified in one or more flowcharts and/or one or more blocks of the flowcharts.

The foregoing descriptions are merely exemplary embodiments of the present disclosure, but are not intended to limit the scope of protection of the present disclosure.

## Industrial applicability

As described above, the method and device for reporting coverage enhancement level indication information, the user equipment and the computer storage medium provided by the embodiments of the present invention have the following beneficial effects: the coverage enhancement level indication information received by the network can reflect the quality of the cellular coverage signal because the coverage enhancement level indication information is modified based on the quality evaluation value of the cellular coverage signal. In addition, the physical resource bearers and the number of repeated transmissions selected by the network during resource allocation and scheduling can be matched with the actual data reception performance of the terminal.

## Claims

1. A method for reporting coverage enhancement level indication information, comprising:

   obtaining (101) a measured value of a reference signal, comparing (101) the measured value of the reference signal with measurement thresholds corresponding to M coverage enhancement levels to obtain a first comparison result, and determining (101) a basic reporting value of coverage enhancement level indication information according to the first comparison result, wherein M is an integer greater than or equal to 1;
   obtaining (102) a quality evaluation value of a cellular coverage signal; and
   modifying (103), according to the quality evaluation value of the cellular coverage signal, the basic reporting value of the coverage enhancement level indication information to obtain a modified value of the coverage enhancement level indication information, and reporting (103) the modified value,
   **characterized in that**, obtaining (102) the quality evaluation value of the cellular coverage signal comprises:
   performing weighted summation on a quality evaluation value of the reference signal and a quality evaluation value of a signal of a cell common channel to obtain the quality evaluation value of the cellular coverage signal.

2. The method according to claim 1, wherein the quality evaluation value of the reference signal is a signal-to-noise ratio of the reference signal.

3. The method according to claim 1, wherein the quality evaluation value of the signal of the cell common channel comprises a signal-to-noise ratio of at least one of the following: a Narrowband Primary Synchronization Signal, NPSS, a Narrowband Secondary Synchronization Signal, NSSS, a Narrowband Physical Broadcast Channel, NPBCH, a Narrowband Physical Downlink Shared Channel, NPDSCH, for carrying System Information Block, SIB, information, and an NPDSCH carrying System Information, SI.

4. The method according to claim 1, wherein modifying (103), according to the quality evaluation value of the cellular coverage signal, the basic reporting value of the coverage enhancement level indication information to obtain the modified value of the coverage enhancement level indication information comprises:

comparing the quality evaluation value of the cellular coverage signal with average signal-to-noise ratio thresholds corresponding to the M coverage enhancement levels to obtain a second comparison result; and
modifying the basic reporting value of the coverage enhancement level indication information according to the second comparison result to obtain the modified value of the coverage enhancement level indication information.

5. The method according to claim 4, wherein in a case where M is greater than 1, the measurement thresholds corresponding to the M coverage enhancement levels comprise a first measurement threshold to an Mth measurement threshold which are sequentially arranged in a descending order, and the average signal-to-noise ratio thresholds corresponding to the M coverage enhancement levels comprise a first average signal-to-noise ratio threshold to an Mth average signal-to-noise ratio threshold which are sequentially arranged in a descending order.

6. The method according to claim 5, wherein modifying the basic reporting value of the coverage enhancement level indication information according to the second comparison result to obtain the modified value of the coverage enhancement level indication information comprises:

in a case where the measured value of the reference signal is greater than or equal to the first measurement threshold and the quality evaluation value of the cellular coverage signal is less than the first average signal-to-noise ratio threshold, determining the modified value of the coverage enhancement level indication information to be equal to a second coverage enhancement level;
setting i to an integer greater than 1 and less than M, in a case where the measured value of the reference signal is greater than or equal to an ith measurement threshold and is less than an (i-1)th measurement threshold, and the quality evaluation value of the cellular coverage signal is less than an ith average signal-to-noise ratio threshold, determining the modified value of the coverage enhancement level indication information to be equal to an (i+1)th coverage enhancement level;
in a case where the measured value of the reference signal is greater than or equal to the Mth measurement threshold and is less than an (M-1)th measurement threshold, and the quality evaluation value of the cellular coverage signal is less than the Mth average signal-to-noise ratio threshold, determining the modified value of the coverage enhancement level indication information to be equal to an Mth coverage enhancement level.

7. The method according to claim 6, wherein
in a case where the measured value of the reference signal is greater than or equal to the first measurement threshold and the quality evaluation value of the cellular coverage signal is greater than or equal to the first average signal-to-noise ratio threshold, the modified value of the coverage enhancement level indication information is determined to be equal to the basic reporting value.

8. The method according to claim 6, wherein
in a case where the measured value of the reference signal is greater than or equal to an ith measurement threshold and is less than an (i-1)th measurement threshold, and the quality evaluation value of the cellular coverage signal is greater than or equal to an ith average signal-to-noise ratio threshold, the modified value of the coverage enhancement level indication information is determined to be equal to the basic reporting value.

9. The method according to claim 6, wherein
in a case where the measured value of the reference signal is greater than or equal to the Mth measurement threshold and is less than the (M-1)th measurement threshold, and the quality evaluation value of the cellular coverage signal is greater than or equal to the Mth average signal-to-noise ratio threshold, the modified value of the coverage enhancement level indication information is determined to be equal to the basic reporting value.

10. The method according to claim 6, wherein
in a case where the measured value of the reference signal is less than or equal to the Mth measurement threshold, the modified value of the coverage enhancement level indication information is determined to be equal to the basic reporting value.

11. The method according to claim 1, wherein the measured value of the reference signal comprises a Reference Signal Receiving Power (RSRP) value; and the measurement thresholds corresponding to the M coverage enhancement levels are thresholds configured by higher-layer signaling.

12. A device for reporting coverage enhancement level indication information, comprising: means for executing the operations of the method according to any one of claims 1 to 11.

13. A user equipment, comprising the device for reporting coverage enhancement level indication information according to claim 12.

14. A computer storage medium, on which a computer program is stored, wherein the computer program implements the operations of the method according to any one of claims 1 to 11 when being executed by a processor.


**Patentansprüche**

1. Verfahren zum Melden von Anzeigeinformationen des Abdeckungsverbesserungsniveaus, umfassend:

Erhalten (101) eines gemessenen Wertes eines Referenzsignals, Vergleichen (101) des gemessenen Wertes des Referenzsignals mit Messschwellenwerten, die M Abdeckungsverbesserungsniveaus entsprechen, um ein erstes Vergleichsergebnis zu erhalten, und Bestimmen (101) eines Basismeldewertes der Anzeigeinformationen des Abdeckungsverbesserungsniveaus gemäß dem ersten Vergleichsergebnis, wobei M eine ganze Zahl größer oder gleich 1 ist;
Erhalten (102) eines Qualitätsbewertungswertes eines zellularen Abdeckungssignals; und
Modifizieren (103), gemäß dem Qualitätsbewertungswert des zellularen Abdeckungssignals, des Basismeldewertes der Anzeigeinformation des Abdeckungsverbesserungsniveaus, um einen modifizierten Wert der Anzeigeinformation des Abdeckungsverbesserungsniveaus zu erhalten, und Melden (103) des modifizierten Wertes,
**dadurch gekennzeichnet, dass** das Erhalten (102) des Qualitätsbewertungswertes des zellularen Abdeckungssignals umfasst:
Durchführen einer gewichteten Summierung eines Qualitätsbewertungswertes des Referenzsignals und eines Qualitätsbewertungswertes eines Signals eines gemeinsamen Zellkanals, um den Qualitätsbewertungswert des zellularen Abdeckungssignals zu erhalten.

2. Verfahren nach Anspruch 1, wobei der Qualitätsbewertungswert des Referenzsignals ein Signal-Rausch-Verhältnis des Referenzsignals ist.

3. Verfahren nach Anspruch 1, wobei der Qualitätsbewertungswert des Signals des gemeinsamen Zellkanals ein Signal-Rausch-Verhältnis von mindestens einem der folgenden umfasst: ein Schmalband-Primärsynchronisationssignal (Narrowband Primary Synchronization Signal), NPSS, ein Schmalband-Sekundärsynchronisationssignal (Narrowband Secondary Synchronization Signal), NSSS, einen physischen Schmalband-Rundfunkkanal (Narrowband Physical Broadcast Channel), NPBCH, einen physischen Schmalband- Downlink-Gemeinschaftskanal (Narrowband Physical Downlink Shared Channel), NPDSCH, zum Übertragen von Systeminformationsblock-Informationen (System Information Block), SIB, und einen NPDSCH, der Systeminformationen (System Information), SI, trägt.

4. Verfahren nach Anspruch 1, wobei das Modifizieren (103) des Basismeldewertes der Anzeigeinformationen des Abdeckungsverbesserungsniveaus gemäß dem Qualitätsbewertungswert des zellularen Abdeckungssignals, um den modifizierten Wert der Anzeigeinformation des Abdeckungsverbesserungsniveaus zu erhalten, umfasst:

Vergleichen des Qualitätsbewertungswertes des zellularen Abdeckungssignals mit durchschnittlichen Signal-Rausch-Verhältnis-Schwellenwerten, die den M Abdeckungsverbesserungsniveaus entsprechen, um ein zweites Vergleichsergebnis zu erhalten; und
Modifizieren des Basismeldewertes der Anzeigeinformationen des Abdeckungsverbesserungsniveaus gemäß dem zweiten Vergleichsergebnis, um den modifizierten Wert der Anzeigeinformationen des Abdeckungsverbesserungsniveaus- zu erhalten.

5. Verfahren nach Anspruch 4, wobei in einem Fall, in dem M größer als 1 ist, die Messschwellenwerte, die den M Abdeckungsverbesserungsniveaus entsprechen, einen ersten Messschwellenwert bis zu einen M-ten Messschwellenwert umfassen, die sequentiell in einer absteigenden Reihenfolge angeordnet sind, und die Schwellenwerte für das durchschnittliche Signal-Rausch-Verhältnis, die den M Abdeckungsverbesserungsniveaus entsprechen, einen ersten Schwellenwert für das durchschnittliche Signal-Rausch-Verhältnis bis zu einem M-ten Schwellenwert für das durchschnittliche Signal-Rausch-Verhältnis umfassen, die sequentiell in einer absteigenden Reihenfolge angeordnet sind.

6. Verfahren nach Anspruch 5, wobei das Modifizieren des Basismeldewertes der Anzeigeinformation des Abdeckungsverbesserungsniveaus gemäß dem zweiten Vergleichsergebnis, um den modifizierten Wert der Anzeigeinformation des Abdeckungsverbesserungsniveaus zu erhalten, umfasst

in einem Fall, in dem der gemessene Wert des Referenzsignals größer oder gleich dem ersten Messschwellenwert ist und der Qualitätsbewertungswert des zellularen Abdeckungssignals kleiner als der erste Schwellenwert des durchschnittlichen Signal-Rausch-Verhältnisses ist, Bestimmen des modifizierten Wertes der Anzeigeinformation des Abdeckungsverbesserungsniveaus als gleich einem zweiten Abdeckungsverbesserungsniveaus;
Einstellen von i auf eine ganze Zahl größer als 1 und kleiner als M, in einem Fall, in dem der gemessene Wert des Referenzsignals größer als oder gleich einem i-ten Messschwellenwert und kleiner als ein (i-1)-ter Messschwellenwert ist und der Qualitätsbewertungswert des zellularen Abdeckungssignals kleiner als ein i-ter Schwellenwert des durchschnittlichen Signal-Rausch-Verhältnisses ist, Bestimmen des modifizierten Wertes der Anzeigeinformation des Abdeckungsverbesserungsniveaus, um gleich einem (i+1)-ten Abdeckungsverbesserungsniveaus zu sein;
in einem Fall, in dem der gemessene Wert des Referenzsignals größer oder gleich dem M-ten Messschwellenwert und kleiner als ein (M-1)-ter Messschwellenwert ist, und der Qualitätsbewertungswert des zellularen Abdeckungssignals kleiner als der M-te durchschnittliche Signal-Rausch-Verhältnis-Schwellenwert ist, Bestimmen des modifizierten Wertes der Anzeigeinformation des Abdeckungsverbesserungsniveaus, um gleich einem M-ten Abdeckungsverbesserungsniveaus zu sein.

7. Verfahren nach Anspruch 6, wobei
in einem Fall, in dem der gemessene Wert des Referenzsignals größer oder gleich dem ersten Messschwellenwert ist und der Qualitätsbewertungswert des zellularen Abdeckungssignals größer oder gleich dem ersten Schwellenwert des durchschnittlichen Signal-Rausch-Verhältnisses ist, der modifizierte Wert der Anzeigeinformation des Abdeckungsverbesserungsniveaus so bestimmt wird, dass er gleich dem grundlegenden Meldewert ist.

8. Verfahren nach Anspruch 6, wobei
in einem Fall, in dem der gemessene Wert des Referenzsignals größer oder gleich einem i-ten Messschwellenwert und kleiner als ein (i-1)-ter Messschwellenwert ist, und der Qualitätsbewertungswert des zellularen Abdeckungssignals größer oder gleich einem i-ten Schwellenwert für das durchschnittliche Signal-Rausch-Verhältnis ist, der modifizierte Wert der Anzeigeinformation des Abdeckungsverbesserungsniveaus so bestimmt wird, dass er gleich dem Basismeldewert ist.

9. Verfahren nach Anspruch 6, wobei
in einem Fall, in dem der gemessene Wert des Referenzsignals größer oder gleich dem M-ten Messschwellenwert und kleiner als der (M-1)-te Messschwellenwert ist, und der Qualitätsbewertungswert des zellularen Abdeckungssignals größer oder gleich dem M-ten Schwellenwert des durchschnittlichen Signal-Rausch-Verhältnisses ist, der modifizierte Wert der Anzeigeinformation des Abdeckungsverbesserungsniveaus- so bestimmt wird, dass er gleich dem Basismeldewert ist.

10. Verfahren nach Anspruch 6, wobei
in einem Fall, in dem der gemessene Wert des Referenzsignals kleiner oder gleich dem M-ten Messschwellenwert ist, der modifizierte Wert der Anzeigeinformation des Abdeckungsverbesserungsniveaus so bestimmt wird, dass er gleich dem Basismeldewert ist.

11. Verfahren nach Anspruch 1, wobei der gemessene Wert des Referenzsignals einen Referenzsignal-Empfangsleistungswert (RSRP) umfasst; und die Messschwellenwerte, die den M-Abdeckungsverbesserungsniveaus entsprechen, Schwellenwerte sind, die durch Signalisierung auf höherer Ebene konfiguriert sind.

12. Vorrichtung zum Melden von Anzeigeinformationen des Abdeckungsverbesserungsniveaus, die Folgendes umfasst:
Mittel zum Ausführen der Operationen des Verfahrens nach einem der Ansprüche 1 bis 11.

13. Benutzergerät, das die Vorrichtung zum Melden von Anzeigeinformationen des Abdeckungsverbesserungsniveaus gemäß Anspruch 12 umfasst.

**14.** Computerspeichermedium, auf dem ein Computerprogramm gespeichert ist, wobei das Computerprogramm die Operationen des Verfahrens nach einem der Ansprüche 1 bis 11 implementiert, wenn es von einem Prozessor ausgeführt wird.

**Revendications**

**1.** Procédé pour rapporter des informations d'indication de niveau d'amélioration de la couverture, comprenant :

obtenir (101) une valeur mesurée d'un signal de référence, comparer (101) la valeur mesurée du signal de référence avec des seuils de mesure correspondant à M niveaux d'amélioration de la couverture pour obtenir un premier résultat de comparaison, et déterminer (101) une valeur de rapport de base des informations d'indication de niveau d'amélioration de la couverture en fonction du premier résultat de comparaison, où M est un nombre entier supérieur ou égal à 1 ;
obtenir (102) une valeur d'évaluation de la qualité d'un signal de couverture cellulaire ; et
modifier (103), en fonction de la valeur d'évaluation de la qualité du signal de couverture cellulaire, la valeur de rapport de base de l'information d'indication de niveau d'amélioration de la couverture pour obtenir une valeur modifiée de l'information d'indication de niveau d'amélioration de la couverture, et communiquer (103) la valeur modifiée,
**caractérisé en ce que** obtenir (102) la valeur d'évaluation de la qualité du signal de couverture cellulaire comprend :
effectuer une sommation pondérée d'une valeur d'évaluation de la qualité du signal de référence et d'une valeur d'évaluation de la qualité d'un signal d'un canal cellulaire commun pour obtenir la valeur d'évaluation de la qualité du signal de couverture cellulaire.

**2.** Procédé selon la revendication 1, dans lequel la valeur d'évaluation de la qualité du signal de référence est un rapport signal/bruit du signal de référence.

**3.** Procédé selon la revendication 1, dans lequel la valeur d'évaluation de la qualité du signal du canal cellulaire commun comprend un rapport signal/bruit d'au moins un des éléments suivants : un signal de synchronisation primaire à bande étroite, NPSS, un signal de synchronisation secondaire à bande étroite, NSSS, un canal de diffusion physique à bande étroite, NPBCH, un canal partagé de liaison descendante physique à bande étroite, NPDSCH, pour transporter des informations de bloc d'informations système, SIB, et un NPDSCH transportant des informations système, SI.

**4.** Procédé selon la revendication 1, dans lequel modifier (103), en fonction de la valeur d'évaluation de la qualité du signal de couverture cellulaire, la valeur de rapport de base des informations d'indication du niveau d'amélioration de la couverture pour obtenir la valeur modifiée des informations d'indication du niveau d'amélioration de la couverture comprend :

comparer la valeur d'évaluation de la qualité du signal de couverture cellulaire avec les seuils de rapport signal/bruit moyen correspondant aux M niveaux d'amélioration de la couverture pour obtenir un deuxième résultat de comparaison ; et
modifier la valeur de rapport de base de l'information d'indication du niveau d'amélioration de la couverture en fonction du deuxième résultat de comparaison pour obtenir la valeur modifiée de l'information d'indication du niveau d'amélioration de la couverture.

**5.** Procédé selon la revendication 4, dans lequel, lorsque M est supérieur à 1, les seuils de mesure correspondant aux M niveaux d'amélioration de la couverture comprennent un premier seuil de mesure jusqu'à un Mème seuil de mesure qui sont disposés séquentiellement dans un ordre descendant, et les seuils de rapport signal/bruit moyen correspondant aux M niveaux d'amélioration de la couverture comprennent un premier seuil de rapport signal/bruit moyen jusqu'à un Mème seuil de rapport signal/bruit moyen qui sont disposés séquentiellement dans un ordre descendant.

**6.** Procédé selon la revendication 5, dans lequel modifier la valeur de rapport de base de l'information d'indication du niveau d'amélioration de la couverture en fonction du deuxième résultat de comparaison pour obtenir la valeur modifiée de l'information d'indication du niveau d'amélioration de la couverture comprend :

dans le cas où la valeur mesurée du signal de référence est supérieure ou égale au premier seuil de mesure et où la valeur d'évaluation de la qualité du signal de couverture cellulaire est inférieure au premier seuil du rapport signal/bruit moyen, déterminer la valeur modifiée de l'information d'indication de niveau d'amélioration de la couverture pour qu'elle soit égale à un deuxième niveau d'amélioration de la couverture ;

régler i à un nombre entier supérieur à 1 et inférieur à M, dans le cas où la valeur mesurée du signal de référence est supérieure ou égale à un ième seuil de mesure et inférieure à un (i-1)ième seuil de mesure, et où la valeur d'évaluation de la qualité du signal de couverture cellulaire est inférieure à un ième seuil de rapport signal/bruit moyen, déterminer la valeur modifiée de l'information d'indication du niveau d'amélioration de la couverture comme étant égale à un (i+1)ième niveau d'amélioration de la couverture ;

dans le cas où la valeur mesurée du signal de référence est supérieure ou égale au Mème seuil de mesure et inférieure au (M-1)ème seuil de mesure, et où la valeur d'évaluation de la qualité du signal de couverture cellulaire est inférieure au Mème seuil de rapport signal/bruit moyen, déterminer la valeur modifiée de l'information d'indication du niveau d'amélioration de la couverture comme étant égale à un Mème niveau d'amélioration de la couverture.

**7.** Procédé selon la revendication 6, dans lequel
dans le cas où la valeur mesurée du signal de référence est supérieure ou égale au premier seuil de mesure et où la valeur d'évaluation de la qualité du signal de couverture cellulaire est supérieure ou égale au premier seuil du rapport signal/bruit moyen, la valeur modifiée de l'information d'indication du niveau d'amélioration de la couverture est déterminée comme étant égale à la valeur de rapport de base.

**8.** Procédé selon la revendication 6, dans lequel
dans le cas où la valeur mesurée du signal de référence est supérieure ou égale à un ième seuil de mesure et inférieure à un (i-1)ième seuil de mesure, et où la valeur d'évaluation de la qualité du signal de couverture cellulaire est supérieure ou égale à un ième seuil de rapport signal/bruit moyen, la valeur modifiée de l'information d'indication du niveau d'amélioration de la couverture est déterminée comme étant égale à la valeur de rapport de base.

**9.** Procédé selon la revendication 6, dans lequel
dans le cas où la valeur mesurée du signal de référence est supérieure ou égale au Mème seuil de mesure et inférieure au (M-1)ième seuil de mesure, et où la valeur d'évaluation de la qualité du signal de couverture cellulaire est supérieure ou égale au Mème seuil de rapport signal/bruit moyen, la valeur modifiée de l'information d'indication du niveau d'amélioration de la couverture est déterminée comme étant égale à la valeur de rapport de base.

**10.** Procédé selon la revendication 6, dans lequel
dans le cas où la valeur mesurée du signal de référence est inférieure ou égale au Mème seuil de mesure, la valeur modifiée de l'information d'indication du niveau d'amélioration de la couverture est déterminée comme étant égale à la valeur de rapport de base.

**11.** Procédé selon la revendication 1, dans lequel la valeur mesurée du signal de référence comprend une valeur de puissance de réception du signal de référence (RSRP) ; et les seuils de mesure correspondant aux M niveaux d'amélioration de la couverture sont des seuils configurés par une signalisation de couche supérieure.

**12.** Dispositif permettant de rapporter des informations d'indication du niveau d'amélioration de la couverture, comprenant : des moyens pour exécuter les opérations du procédé selon l'une des revendications 1 à 11.

**13.** Équipement d'utilisateur comprenant le dispositif permettant de rapporter des informations d'indication du niveau d'amélioration de la couverture selon la revendication 12.

**14.** Support de stockage informatique, sur lequel est stocké un programme d'ordinateur, dans lequel le programme d'ordinateur met en oeuvre les opérations du procédé selon l'une des revendications 1 à 11 lorsqu'il est exécuté par un processeur.

## Fig. 1

| |
|---|
| Obtaining a measured value of a reference signal, comparing the measured value of the reference signal with measurement thresholds corresponding to M coverage enhancement levels to obtain a first comparison result, and determining a basic reporting value of coverage enhancement level indication information according to the first comparison result |

101

| |
|---|
| Obtaining a quality evaluation value of a cellular coverage signal |

102

| |
|---|
| Modifying, according to the quality evaluation value of the cellular coverage signal, the basic reporting value of the coverage enhancement level indication information to obtain a modified value of the coverage enhancement level indication information, and reporting the modified value |

103

## Fig. 2

Reference signal measurement of N subframes → RSRP_means → Comparator 1 → CE_basic → Comparator 2 → CE_report

RSRP thresholds configured via higher-layer signaling

Average signal-to-noise ratio thresholds

Calculation of a signal-to-noise ratio of a cell common channel → $SNR_{NRS}$, $SNR_{NPSS}$, $SNR_{NSSS}$, $SNR_{NPBCH}$ → Calculation of an average signal-to-noise ratio → $SNR_{AVG}$

**Fig. 3**

First processing unit  301

Obtaining unit  302

Second processing unit  303

**Fig. 4**

40

42

Processor

Memory

41

Device for reporting coverage enhancement level indication information

**EP 3 905 572 B1**

**REFERENCES CITED IN THE DESCRIPTION**

**Patent documents cited in the description**

- US 2018176847 A1
- WO 2018232696 A1